# EUROPÄISCHE PATENTSCHRIFT

(11) **EP 2 267 328 B1**
(45) Veröffentlichungstag und Bekanntmachung des Hinweises auf die Patenterteilung: **08.04.2015**
(21) Anmeldenummer: 10161828.8
(22) Anmeldetag: 04.05.2010
(51) Int. Cl.: F16D 3/40, B23P 19/02

(54) **Vorrichtung zur Montage und Demontage zur Demontage einer Lagerbüchse eines Kreuzgelenks**
Device for mounting and demounting for demounting a bushing of a u-joint
Dispositif de montage et de démontage d'un coussinet de joint universel

(30) Priorität: 18.06.2009 DE 102009029797
(43) Veröffentlichungstag der Anmeldung: 29.12.2010
(73) Patentinhaber: Siemer, Alfred, 26689 Apen (DE)
(72) Erfinder: Siemer, Alfred, 26689 Apen (DE)
(74) Vertreter: Müller, Thomas Michael

(56) Entgegenhaltungen:
- US-A- 3 156 038
- US-A- 3 224 086
- US-A- 3 786 544
- US-B1- 6 324 740

## Beschreibung

Die Erfindung betrifft eine Vorrichtung zur Montage und Demontage einer Lagerbüchse in eine bzw. aus einer Lagerbohrung eines Kreuzgelenks, umfassend einen stationär angeordneter Schlaghammer, eine Führung, gegenüber der das Kreuzgelenk bei der Montage oder Demontage abgestützt werden kann, sowie ein Schlagwerkzeug, das von dem Schlaghammer in Richtung einer Hauptachse vibrierend angetrieben ist und zur Montage oder Demontage der Lagerbüchse dient.

Eine Vorrichtung dieser Art zur Montage eines Schaftes in eine Bohrung ist aus der US 3 224 086 A bekannt.

Die zu montierenden bzw. demontierenden Kreuzgelenke umfassen zwei Gelenkgabeln, welche über ein Zapfenkreuz miteinander verbunden sind. Das Zapfenkreuz weist Zapfen auf, die über Lagerbüchsen in Lagerbohrungen der Gabelarme der Kreuzgelenkgabeln gelagert sind. Die Lagerbüchsen sind mit Presssitz in den Lagerbohrungen aufgenommen und sind in der Regel an der vom Zapfenkreuz abgewandten Seite mit Sicherungsringen axial in der Lagerbohrung gesichert. Bisher werden Kreuzgelenke manuell montiert und demontiert. Hierzu werden Austreibwerkzeuge verwendet, die einen Arbeitsabschnitt aufweisen, der kreiszylindrisch gestaltet ist und an die Lagerbohrung angepasst sind, d. h. der Außendurchmesser des Arbeitsabschnitts ist geringfügig kleiner als der Innendurchmesser der Lagerbohrung, so dass das Austreibwerkzeug in die Lagerbohrung eingeführt werden kann. Zur Demontage wird zunächst das Austreibwerkzeug von außen in die Lagerbohrung eines Gabelarms eingeführt, wobei durch Hammerschläge auf das Austreibwerkzeug zunächst der Sicherungsring zum axialen Sichern der jeweiligen Lagerbüchse entspannt wird, so dass der Sicherungsring einfach entnommen werden kann. Daraufhin wird das Kreuzgelenk mit der zu demontierenden Lagerbüchse nach oben gerichtet auf einen Schraubstock abgelegt, so dass die Gabelarme der anderen Kreuzgelenkgabeln auf dem Schraubstock aufliegen. Durch Hammerschläge auf den Gabelarm der Kreuzgelenkgabel, dessen Lagerbüchse demontiert werden soll, wird die zu demontierende Lagerbüchse ausgetrieben. Alternativ kann das Austreibwerkzeug verwendet werden, wobei in diesem Fall zunächst der Sicherungsring der gegenüberliegenden Lagerbüchse ebenfalls entfernt werden muss und die gegenüberliegende Lagerbüchse mit dem Austreibwerkzeug weiter eingetrieben wird, so dass die zu demontierende Lagerbüchse aus ihrer Lagerbohrung austritt. Sobald die zu demontierende Lagerbüchse weit genug aus der Lagerbohrung vorsteht, wird ein Sonderwerkzeug verwendet, mittels dessen die Lagerbüchse an dem ausgetriebenen Ende eingespannt werden kann. Das Sonderwerkzeug selbst wird hierbei mittels des Schraubstocks eingespannt und gehalten, so dass durch Schläge auf die Kreuzgelenkgabel oder durch Drehbewegungen die Lagerbüchse aus der Lagerbohrung herausgezogen werden kann. Daraufhin kann das Kreuzgelenk mit der Lagerbohrung, aus der die Lagerbüchse bereits demontiert wurde, nach unten gerichtet auf den Schraubstock aufgelegt werden und durch Schläge auf die Kreuzgelenkgabel die gegenüberliegende Lagerbüchse ausgetrieben werden. Auch hierbei kann das Austreibwerkzeug verwendet werden, wobei dieses in die nun freie Lagerbohrung eingeführt wird, bis sich dieses gegen das Ende des Zapfens des Zapfenkreuzes abstützt und mit dem Austreibwerkzeug ausgetrieben werden. Die ausgetriebene Lagerbüchse wird dann wieder mit dem Sonderwerkzeug aus der Lagerbohrung gezogen.

Zur Montage wird zunächst das Zapfenkreuz mit einem der Zapfen von innen in eine der Lagerbohrungen eingeführt. Von außen wird eine Lagerbüchse in die Lagerbohrung eingesteckt und durch Hammerschläge eingetrieben. Um die Lagerbüchse tiefer in die Lagerbohrung eintreiben zu können wird das Austreibwerkzeug verwendet. In selbiger Weise wird die gegenüberliegende Lagerbuchse montiert.

Aufgabe der vorliegenden Erfindung ist es, eine Vorrichtung bereit zu stellen, mit der eine leichte Montage und Demontage eines Kreuzgelenks ermöglicht wird.

Die Aufgabe wird erfindungsgemäß durch eine Vorrichtung gemäß Anspruch 1 gelöst.

Die erfindungsgemäße Vorrichtung bietet den Vorteil, dass aufgrund des Einsatzes eines Schlaghammers die Montage oder Demontage der Lagerbüchse ohne großen Kraftaufwand bewerkstelligt werden kann. Der Schlaghammer ist angetrieben, z. B. pneumatisch, hydraulisch oder elektrisch. Ferner muss nicht, wie bei der bisherigen manuellen Montage und Demontage, das Kreuzgelenk mehrfach ein- oder umgespannt werden. Dies ergibt sich daraus, dass der Schlaghammer stationär angeordnet ist und das Kreuzgelenk manuell gegenüber der Führung ausgerichtet und gegen diese abgestützt und gegen das Schlagwerkzeug gedrückt werden kann.

Die Führung weist eine Grundplatte auf, auf die das Kreuzgelenk bei der Montage oder Demontage aufgelegt werden kann.

Damit unterschiedlich große Kreuzgelenke montiert oder demontiert werden können, ist vorzusehen, dass der Schlaghammer gegenüber der Führung verstellbar ist. Somit kann der Abstand des Schlaghammers gegenüber der Führung je nach Größe des Kreuzgelenks eingestellt werden. Der Schlaghammer kann hierbei gegenüber der Führung höhenverstellbar ausgebildet sein. Hierzu kann der Schlaghammer linear verstellbar oder schwenkbar aufgenommen sein.

Die Grundplatte kann gleichzeitig als Auflage für den Schlaghammer dienen, wobei die gesamte Vorrichtung über die Grundplatte auf einen Werkzeugtisch fest montiert werden kann. Zusätzlich zu einer Grundplatte sind auch seitliche Führungen des Kreuzgelenks denkbar, um die Ausrichtung des Kreuzgelenks zu vereinfachen und reproduzierbar zu gestalten.

Vorzugsweise ist der Schlaghammer derart ausgerichtet, dass es im wesentlichen horizontal vibrierend angetrieben ist. Wenn der Schlaghammer gegenüber der Führung, bzw. gegenüber der Grundplatte, verschwenkbar ist, bedeutet dies, dass kleine Winkelabweichungen der Vibrationsrichtung gegenüber der Führungsrichtung möglich sind, jedoch das Kreuzgelenk grundsätzlich entlang der Führung gegen die Vibrationsrichtung bewegt werden kann.

Das Schlagwerkzeug kann ein Meißel sein, der dazu dient, vibrierend auf einen Gabelarm des Kreuzgelenks einzuwirken, um durch die Vibrationsbewegung des Gabelarms die Lagerbüchse aus der Lagerbohrung auszutreiben.

Ferner kann das Schlagwerkzeug ein Austreibwerkzeug mit einem zylindrischen Arbeitsabschnitt sein, dessen Außendurchmesser in den Innendurchmesser der Lagerbohrung derart angepasst ist, dass es in diese einführbar ist. Das Schlagwerkzeug dient dazu, in die Lagerbohrung eingeführt zu werden und durch vibrierende Einwirkung des Schlagwerkzeugs auf die Lagerbuchse diese tiefer in die Lagerbohrung einzutreiben und damit zu bewirken, dass über das Zapfenkreuz die gegenüberliegende Lagerbüchse aus der jeweiligen Lagerbohrung ausgetrieben wird.

Der zylindrische Arbeitsabschnitt ist vorzugsweise hülsenförmig gestaltet und weist eine Ausnehmung zur Aufnahme eines Zapfens eines Zapfenkreuzes oder eines Schmiernippels einer Lagerbüchse auf. Hierdurch kann das Zapfenkreuz gegenüber den Lagerbohrungen zentriert gehalten, wenn eine erste Lagerbüchse bereits demontiert ist und die gegenüberliegende Lagerbüchse dadurch ausgetrieben wird, dass auf den freien Zapfen vibrierend eingewirkt wird. Ferner kann beim Eintreiben einer Lagerbüchse mit Schmiernippel die Ausnehmung dazu dienen, den Schmiernippel aufzunehmen, so dass dieser nicht beschädigt wird.

Die Ausnehmung kann konisch gestaltet sein, so dass Zapfen unterschiedlichen Durchmessers von einem einzigen Schlagwerkzeug aufgenommen werden können.

Es sind unterschiedliche Schlagwerkzeuge vorgesehen, die je nach Anwendungsfall und je nach Kreuzgelenkgröße zum Einsatz kommen. Um ein schnelles Wechseln der Schlagwerkzeuge zu ermöglichen, weist der Schlaghammer eine Werkzeugaufnahme auf, wobei die Werkzeugaufnahme einen Stößel und ein Kupplungselement umfasst.

Der Stößel überträgt die Vibrationsbewegung des Schlaghammers auf das Schlagwerkzeug, wobei das Schlagwerkzeug auf den Stößel aufgesetzt wird. Das Schlagwerkzeug umfasst ein Gegenkupplungselement, das mit dem Kupplungselement lösbar verbunden ist. Vorzugsweise handelt es sich hierbei um eine Schnellkupplung.

Zur Demontage einer Lagerbüchse aus einer Lagerbohrung eines Gabelarms eines Kreuzgelenks wird mit dem Schlaghammer neben der Lagerbohrung auf den Gabelarm vibrierend eingewirkt. Durch die Vibration des Gabelarms wird die Lagerbüchse aus der Lagerbohrung ausgetrieben. Hierbei kann das Kreuzgelenk gegen die Führung, z. B. die Grundplatte, abgestützt sein und gegen das vibrierend angetriebene Schlagwerkzeug gedrückt werden.

Eine bevorzugte Ausführung wird im folgenden anhand der Zeichnungen näher erläutert.

Hierin zeigt:
- Figur 1: eine perspektivische Ansicht einer erfindungsgemäßen Vorrichtung,
- Figur 2: eine schematische Draufsicht eines Schlaghammers der Vorrichtung gemäß Figur 1,
- Figur 3: eine perspektivische Explosionsdarstellung eines Kreuzgelenks, und
- Figur 4: eine Seitenansicht der Vorrichtung gemäß Figur 1.

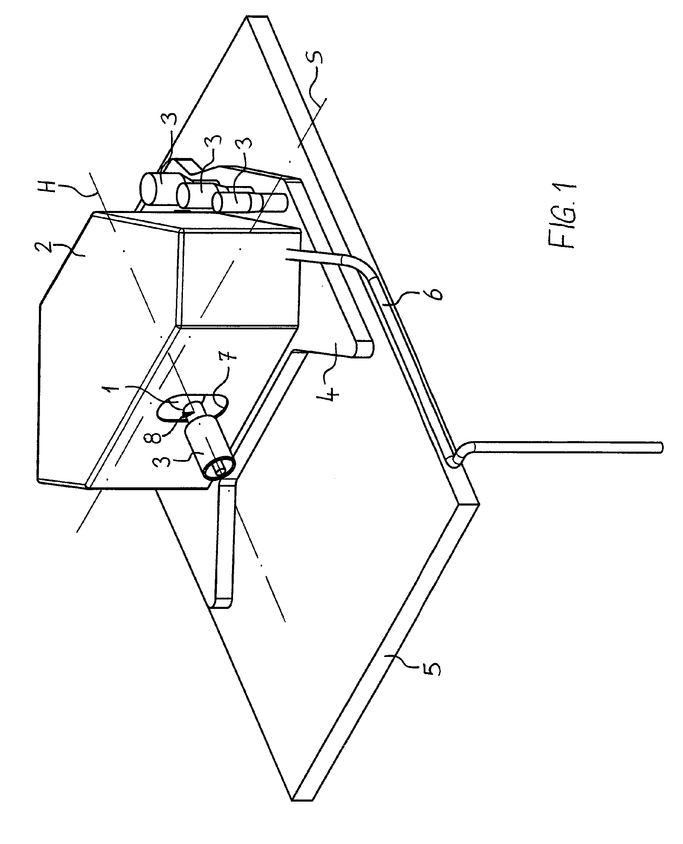

Figur 1 zeigt eine perspektivische Ansicht einer erfindungsgemäßen Vorrichtung mit einem Schlaghammer1, der innerhalb eines Gehäuses 2 angeordnet ist. Durch eine stirnseitige Öffnung 7 im Gehäuse 2 ragt eine Werkzeugnahme 8 des Schlaghammers 1 aus dem Gehäuse 2 heraus. An dem herausragenden Ende der Werkzeugaufnahme 8 ist ein Schlagwerkzeug 3 befestigt. Der Schlaghammer 1 ist, wie später noch erläutert wird, um eine horizontal angeordnete Schwenkachse S schwenkbar im Gehäuse 2 aufgenommen. Ein hier nicht dargestelltes Hammerwerk innerhalb des Schlaghammers 1 treibt das Schlagwerkzeug 3 vibrierend in Richtung einer Hauptachse H an, welche im rechten Winkel zur Schwenkachse S und in einer Ausgangsstellung des Schlaghammers 1 horizontal angeordnet ist. Der Schlaghammer 1 ist auf einer Bodenplatte 4 montiert, auf der auch das Gehäuse 2 befestigt ist. Die Bodenplatte 4 dient ferner zur Magazinierung weiterer Schlagwerkzeuge 3', 3" und 3"'. Die Bodenplatte 4 ist wiederum mit einer Grundplatte 5 verbunden, welche als Führung für ein Zapfenkreuz dient. Das zu montierende oder zu demontierende Zapfenkreuz kann auf die Grundplatte 5 aufgelegt werden und in Richtung der Hauptachse H gegen das Schlagwerkzeug 3 manuell gedrückt werden. Zur Höheneinstellung des Schlagwerkzeugs 3 relativ zur Grundplatte 5 ist, wie bereits erläutert, der Schlaghammer 1 schwenkbar angeordnet. Alternativ kann auch vorgesehen sein, dass der Schlaghammer 1 linear verstellbar geführt ist.

Bei dem Schlaghammer 1 handelt es sich um einen pneumatisch, ggfs. auch hydraulisch oder elektrisch angetriebenen Schlaghammer 1, der über eine pneumatischen Zuleitung 6 gespeist ist. Über ein hier nicht dargestelltes Fußpedal kann die über die Zuleitung 6 zur Verfügung gestellte Druckluft variiert werden, so dass der Monteur die Hände frei hat, um das Kreuzgelenk zu halten und gegen das Schlagwerkzeug zu drücken.

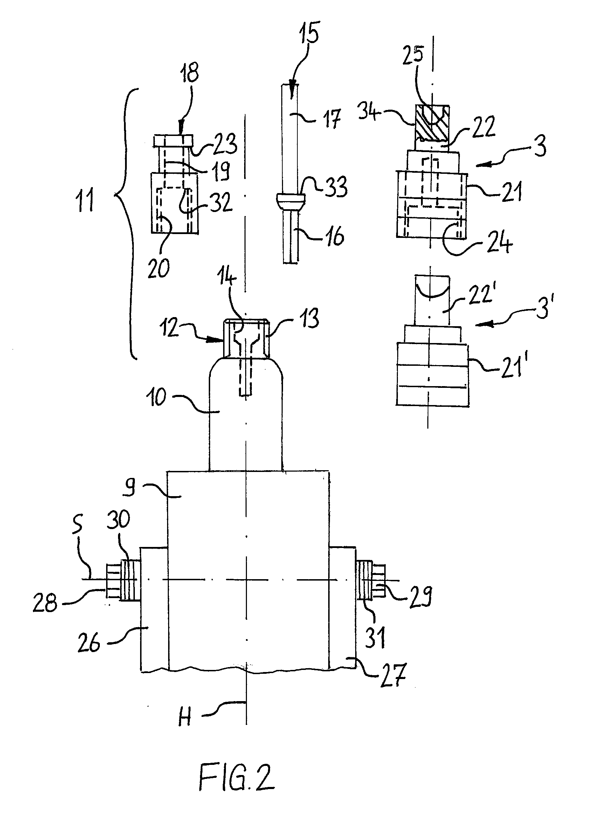

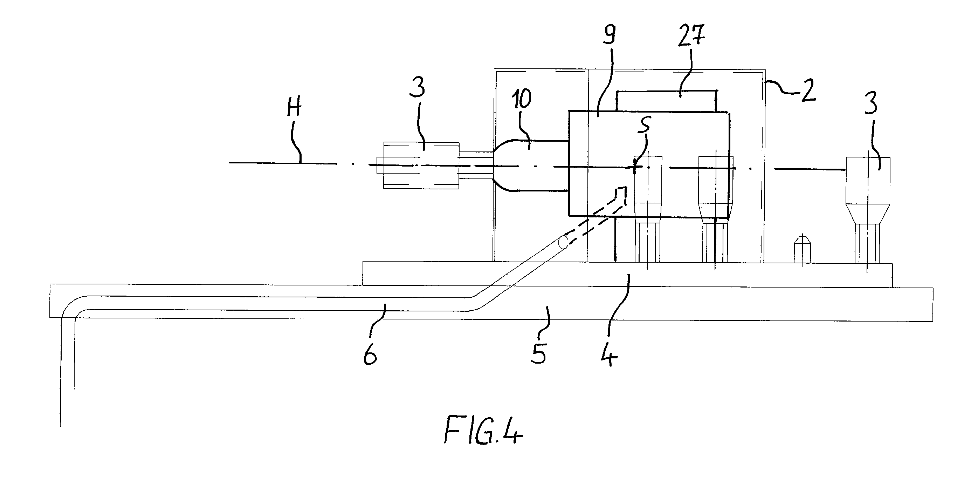

Figur 2 zeigt eine schematische Draufsicht des Schlaghammers 1 der Vorrichtung gemäß Figur 1 und wird im folgenden mit Figur 4, welche eine Seitenansicht der erfindungsgemäßen Vorrichtung zeigt, beschrieben. Der Schlaghammer 1 umfasst ein Hammerwerk 9, das um eine Schwenkachse S schwenkbar angeordnet ist. Das Hammerwerk 9 treibt einen Hammerkopf 10 vibrierend in Richtung der Hauptachse H an. An dem Hammerkopf 10 ist eine Werkzeugaufnahme 11 vorgesehen, welche einen Befestigungsabschnitt 12 am Hammerkopf 10 umfasst. Der Befestigungsabschnitt 12 ist mit einem Außengewinde 13 versehen. Ferner weist er eine stirnseitig angeordnete Aufnahme 14 auf, welche ausgehend von einer kreiszylindrischen Bohrung in einen Abschnitt mit unrundem Querschnitt übergeht, insbesondere in einen Querschnitt in Mehrkantform.

In die Aufnahme 14 des Hammerkopfs 10 lässt sich ein Stößel 15 einsetzen. Dieser weist einen Mehrkantabschnitt 16 auf, der in die Aufnahme 14 eingesteckt wird und im mehrkantförmigen Abschnitt der Aufnahme 14 drehfest gehalten ist. Der Stößel weist ferner einen zylindrischen Abschnitt 17 auf, der aus der Aufnahme 14 herausragt.

Zum Befestigen des Stößels 15 ist eine Befestigungshülse 18 vorgesehen, die als Kupplungselement für ein Schlagwerkzeug 3 dient. Die Befestigungshülse 18 weist eine Durchgangsbohrung 19 auf, mit der sie auf den zylindrischen Abschnitt 17 des Stößels 15 aufgeschoben wird. Die Durchgangsbohrung 19 weist zumindest teilweise ein Innengewinde 20 auf, welches auf das Außengewinde 13 des Befestigungsabschnitts 12 aufschraubbar ist. Die Durchgangsbohrung 19 ist derart mit einer Schulter 32 gestaltet, dass diese im montierten Zustand der Befestigungshülse 18 gegen eine Schulter 33 des Stößels 15 abgestützt ist und diesen in der Aufnahme 14 axial sichert.

Auf die Werkzeugaufnahme 11, welche insgesamt den Befestigungsabschnitt 12, den Stößel 15 und die Befestigungshülse 18 umfasst, lassen sich verschiedene Schlagwerkzeuge 3, 3' befestigen. Exemplarisch sind zwei Schlagwerkzeuge 3, 3' dargestellt. Die Schlagwerkzeuge 3, 3' weisen einen Werkzeugteil 22, 22' auf, um welches ein Gegenkupplungselement 21 angeordnet ist. Das Werkzeugteil 22 weist eine Bohrung 24 auf, welche einen ersten erweiterten Abschnitt aufweist und einen tiefer liegenden verengten gegenüber dem erweiterten Abschnitt mit geringerem Durchmesser versehenen Abschnitt auf. Der erweiterte Abschnitt der Bohrung 24 dient dazu, die Befestigungshülse 18 aufzunehmen. Gegenüber dem Werkzeugteil 22, 22' kann das Gegenkupplungselement 21, 21' derart verschoben werden, dass z. B. eine Schnellkupplung realisiert ist, wobei Kugeln entweder radial nach außen bewegbar sind, oder nach innen vorragend gesichert sind und in eine Außenumfangsnut 23 der Befestigungshülse 18 greifen. Der Abschnitt der Bohrung 24 mit geringerem Durchmesser dient zur Aufnahme des zylindrischen Abschnitts 17 und zur Übertragung der Vibrationsbewegung auf das Werkzeugteil 22.

Das Schlagwerkzeug 3 ist als Austreibwerkzeug mit einem zylindrischen Arbeitsabschnitt 34 ausgebildet. Stirnseitig weist der zylindrische Arbeitsabschnitt 34 eine konische Ausnehmung 25 auf, die zur Aufnahme eines Zapfens eines Zapfenkreuzes dient. Ferner kann beim Eintreiben einer Lagerbüchse ein Schmiernippel der Lagerbüchse in die Ausnehmung 25 eintauchen, so dass dieser nicht beschädigt wird. Der zylindrische Arbeitsabschnitt 34 dient dazu, axial eine Lagerbüchse auszutreiben und in eine Lagerbohrung einer Kreuzgabel einzutauchen.

Das andere dargestellte Schlagwerkzeug 3' ist als Meißel ausgebildet, um axial auf einen Gabelarm einer Kreuzgabel vibrierend einzuwirken.

Das Hammerwerk 9 ist gegenüber einer ersten Wange 26 und einer zweiten Wange 27 schwenkbar befestigt, wobei die erste Wange 26 und die zweite Wange 27 mit der in Figur 1 dargestellten Bodenplatte 4 verbunden sind. Das Hammerwerk 9 ist über Befestigungsschrauben 28, 29 an den Wangen 26, 27 befestigt, wobei diese eine Vorspannung über Tellerfederpakete 30, 31 erzeugen, um die Haltekräfte gegen Verschwenken einstellen zu können.

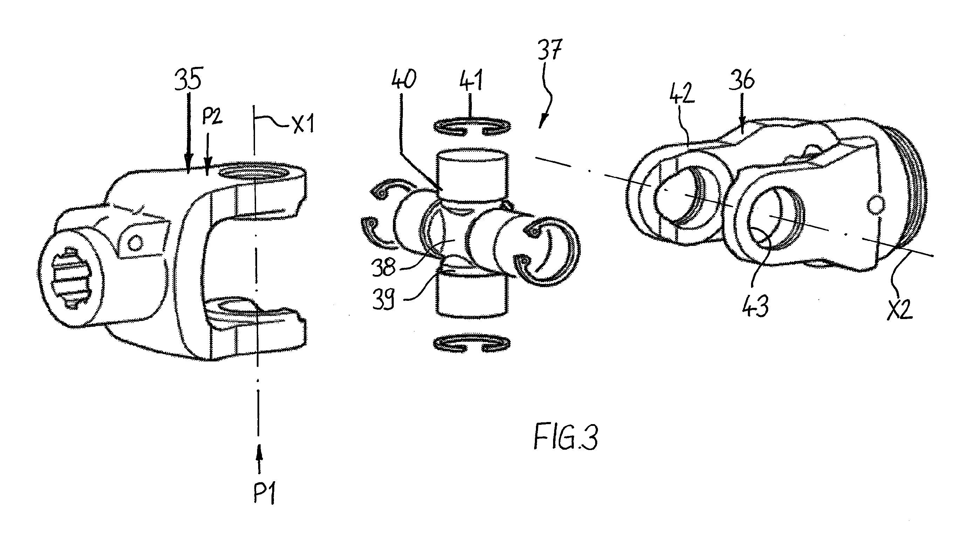

Figur 3 zeigt eine perspektivische Explosionsdarstellung eines Zapfenkreuzes, welches mit der erfindungsgemäßen Vorrichtung gemäß der vorangehenden Figuren montiert bzw. demontiert werden kann. Das Zapfenkreuz umfasst eine erste Gelenkgabel 35 und eine zweite Gelenkgabel 36, die über eine Zapfenkreuzgarnitur 37 schwenkbar zueinander angeordnet sind. Die Zapfenkreuzgarnitur 37 umfasst ein Zapfenkreuz 38 mit vier jeweils paarweise koaxial zueinander angeordneten Zapfen 39. Auf den Zapfen sind Lagerbüchsen 40 über Nadellager drehbar angeordnet, welche in Lagerbohrungen 43 der Gelenkgabeln 42 der Gelenkgabeln 35, 36 einsitzen und mittels Sicherungsringen 41 axial gesichert sind. Somit lassen sich die beiden Gelenkgabeln 35, 36 um senkrecht zueinander angeordnete Achsen X1, X2 schwenken.

Zur Demontage der Zapfenkreuzgarnitur 37 werden zunächst die Sicherungsringe 41 entfernt. Daraufhin wird mit einem Schlagwerkzeug in Form eines Austreibwerkzeugs gemäß Figur 2 von außen vibrierend auf eine der Lagerbuchsen 40 eingewirkt, z. B. in Richtung des Pfeils P1. Somit wird die in Figur 3 dargestellte untere Lagerbüchse tiefer in die Lagerbohrung eingedrückt und die gegenüberliegende oben liegende Lagerbüchse aus der Lagerbohrung ausgetrieben. Danach wird mit einem Schlagwerkzeug in Form eines Meißels in Richtung des Pfeils P2 auf den in Figur 3 oben dargestellten Gabelarm der ersten Gelenkgabel 35 vibrierend eingewirkt, wobei hierdurch die Lagerbüchse aus der Lagerbohrung in Richtung des Pfeils P1 ausgetrieben wird. Ebenso wird dann die untere Lagerbüchse durch vibrierende Einwirkung auf den unteren dargestellten Gabelarm herausgetrieben.

Zum Montieren lassen sich die Lagerbüchsen mittels eines Schlagwerkzeugs in Form eines Austreibwerkzeugs auch in die jeweiligen Lagerbohrungen eintreiben.

### Bezugszeichenliste

- 1: Schlaghammer
- 2: Gehäuse
- 3: Schlagwerkzeug
- 4: Bodenplatte
- 5: Grundplatte
- 6: Zuleitung
- 7: Öffnung
- 8: Werkzeugaufnahme
- 9: Hammerwerk
- 10: Hammerkopf
- 11: Werkzeugaufnahme
- 12: Befestigungsabschnitt
- 13: Außengewinde
- 14: Aufnahme
- 15: Stößel
- 16: Mehrkantabschnitt
- 17: zylindrischer Abschnitt
- 18: Befestigungshülse/Kupplungselement
- 19: Durchgangsbohrung
- 20: Innengewinde
- 21: Gegenkupplungselement
- 22: Werkzeugteil
- 23: Außenumfangsnut
- 24: Bohrung
- 25: Ausnehmung
- 26: erste Wange
- 27: zweite Wange
- 28: Befestigungsschraube
- 29: Befestigungsschraube
- 30: Tellerfederpaket
- 31: Tellerfederpaket
- 32: Schulter
- 33: Schulter
- 34: zylindrischer Arbeitsabschnitt
- 35: erste Gelenkgabel
- 36: zweite Gelenkgabel
- 37: Zapfenkreuzgarnitur
- 38: Zapfenkreuz
- 39: Zapfen
- 40: Lagerbüchse
- 41: Sicherungsring
- 42: Gabelarm
- 43: Lagerbohrung

- S: Schwenkachse
- H: Hauptachse

## Patentansprüche

1. Vorrichtung zur Montage und Demontage einer Lagerbüchse (40) in eine bzw.
aus einer Lagerbohrung (43) eines Kreuzgelenks, umfassend einen stationär angeordneter Schlaghammer (1),
eine Führung (5), gegenüber der das Kreuzgelenk bei der Montage oder Demontage abgestützt werden kann, sowie
ein Schlagwerkzeug (3), das von dem Schlaghammer (1) in Richtung einer Hauptachse (H) vibrierend antreibbar ist und zur Montage oder Demontage der Lagerbüchse (40) dient,
**dadurch gekennzeichnet**,
dass die Führung (5) eine Grundplatte aufweist, auf die das Kreuzgelenk bei der Montage oder Demontage aufgelegt und entlang der Führung in Richtung der Hauptachse (H) gegen das Schlagwerkzeug (3) manuell gedrückt werden kann.

2. Vorrichtung nach Anspruch 1,
**dadurch gekennzeichnet**,
dass der Schlaghammer (1) gegenüber der Führung (5) verstellbar ist.

3. Vorrichtung nach einem der vorangehenden Ansprüche,
**dadurch gekennzeichnet**,
dass der Schlaghammer (1) derart ausgerichtet ist, dass das Schlagwerkzeug (3) im wesentlichen horizontal vibrierend antreibbar ist.

4. Vorrichtung nach einem der vorangehenden Ansprüche,
**dadurch gekennzeichnet**,
dass das Schlagwerkzeug (3) ein Meißel ist.

5. Vorrichtung nach einem der Ansprüche 1 bis 3,
**dadurch gekennzeichnet**,
dass das Schlagwerkzeug (3) ein Austreibwerkzeug mit einem zylindrischen Arbeitsabschnitt (34) ist, dessen Außendurchmesser an den Innendurchmesser der an die Lagerbohrung (43) derart angepasst ist, dass es in diese einführbar ist.

6. Vorrichtung nach Anspruch 5,
**dadurch gekennzeichnet**,
dass der zylindrische Arbeitsabschnitt (34) hülsenförmig gestaltet ist und eine stirnseitige Ausnehmung (25) zur Aufnahme eines Zapfens (39) eines Zapfenkreuzes (38) oder eines Schmiernippels einer Lagerbüchse aufweist.

7. Vorrichtung nach Anspruch 6,
**dadurch gekennzeichnet**,
dass die Ausnehmung (25) konisch gestaltet ist.

8. Vorrichtung nach einem der vorangehenden Ansprüche,
**dadurch gekennzeichnet**,
dass der Schlaghammer (1) eine Werkzeugaufnahme (11) aufweist, wobei die Werkzeugaufnahme (11) einen Stößel (15) und ein Kupplungselement (18) umfasst.

9. Vorrichtung nach Anspruch 8,
**dadurch gekennzeichnet**,
dass auf den Stößel (15) das Schlagwerkzeug (3) aufgesetzt ist, welches ein Gegenkupplungselement (21), das mit dem Kupplungselement (18) lösbar verbunden ist, umfasst.

## Claims

1. Device for mounting and dismounting a bearing bush (40) in a or from a bearing bore (43) of a universal joint, comprising
a stationarily arranged percussion hammer (1),
a guide (5), relative to which the universal joint can be supported during the mounting or dismounting, as well as
a percussion tool (3), which is vibratingly driveable by the percussion hammer (1) in direction of a main axis (H) and serves for mounting and dismounting of the bearing bush (40),
**characterised in**
that the guide (5) has a base plate, on which the universal joint can be put during the mounting and dismounting and which can be manually pushed along the guide in direction of the main axis (H) against the percussion tool (3).

2. Device according to claim 1,
**characterised in**
that the percussion hammer (1) is displaceable relative to the guide (5).

3. Device according to one of the preceding claims,
**characterised in**
that the percussion hammer (1) is aligned such, that the percussion tool (3) is substantially horizontally drivable in a vibrating manner.

4. Device according to one of the preceding claims,
**characterised in**
that the percussion tool (3) is a chisel.

5. Device according to one of claims 1 to 3,
**characterised in**
that the percussion tool (3) is a driving-out tool with a cylindrical working portion (34), which outer diameter is adapted to the inner diameter of the bearing bore (43) such, that it is insertable therein.

6. Device according to claim 5,
**characterised in**
that the cylindrical working portion (34) is formed sleeve-like and has an end-sided recess (25) for accommodating a journal (39) of a cross (38) or a lubricating nipple of a bearing bush.

7. Device according to claim 6,
**characterised in**
that the recess (25) is formed conical.

8. Device according to one of the preceding claims,
**characterised in**
that the percussion hammer (1) has a tool holding fixture (11), wherein the tool holding fixture (11) comprises a plunger (15) and a coupling element (18).

9. Device according to claim 8,
**characterised in**
that the percussion tool (3) is attached on the plunger (15) and comprises a counter coupling element (21), which is detachably connected to the coupling element (18).

## Revendications

1. Dispositif de montage et de démontage d'un coussinet de palier (40) dans, respectivement depuis, un alésage de palier (43) d'un joint de cardan, comprenant
un marteau à percussion (1) disposé fixe,
un guidage (5) par rapport auquel le joint de cardan peut être appuyé pendant le montage ou le démontage, ainsi
qu'un outil à percussion (3) qui peut être entraîné en vibration par le marteau à percussion (1) en direction d'un axe principal (H) et sert au montage ou au démontage du coussinet de palier (40),
**caractérisé en ce que**
le guidage (5) présente une plaque de base sur laquelle le joint de cardan peut être posé pendant le montage ou le démontage et poussé manuellement le long du guidage en direction de l'axe principal (H) contre l'outil à percussion (3).

2. Dispositif selon la revendication 1,
**caractérisé en ce que**
le marteau à percussion (1) peut être réglé par rapport au guidage (5).

3. Dispositif selon l'une des revendications précédentes,
**caractérisé en ce que**
le marteau à percussion (1) est ainsi orienté que l'outil à percussion (3) peut être entraîné en vibration essentiellement horizontalement.

4. Dispositif selon l'une des revendications précédentes,
**caractérisé en ce que**
l'outil à percussion (3) est un burin.

5. Dispositif selon l'une des revendications 1 à 3,
**caractérisé en ce que**
l'outil à percussion (3) est un outil d'expulsion avec une section de travail (34) cylindrique dont le diamètre extérieur est ainsi adapté au diamètre intérieur de l'alésage de palier (43) qu'il peut être introduit dans celui-ci.

6. Dispositif selon la revendication 5,
**caractérisé en ce que**
la section de travail (34) cylindrique est en forme de manchon et présente un évidement frontal (25) pour recevoir un tourillon (39) d'un croisillon de cardan (38) ou d'un raccord de graissage d'un coussinet de palier.

7. Dispositif selon la revendication 6,
**caractérisé en ce que**
l'évidement (25) est conique.

8. Dispositif selon l'une des revendications précédentes,
**caractérisé en ce que**
le marteau à percussion (1) présente une réception d'outil (11), sachant que la réception d'outil (11) comprend un poussoir (15) et un élément de couplage (18).

9. Dispositif selon la revendication 8,
**caractérisé en ce que**
l'outil à percussion (3) est posé sur le poussoir (15), lequel comprend un élément de contre-couplage (21) relié de façon séparable à l'élément de couplage (18).
